# EUROPEAN PATENT SPECIFICATION

(11) **EP 2 599 753 B1**
(45) Date of publication and mention of the grant of the patent: **24.10.2018**
(21) Application number: 12195120.6
(22) Date of filing: 30.11.2012
(51) Int. Cl.: C02F 1/469, C02F 1/461

(54) **Capacitive deionization apparatus**
Kapazitive Deionisierungsvorrichtung
Appareil de déionisation capacitive

(30) Priority: 01.12.2011 KR 20110127629
(43) Date of publication of application: 05.06.2013
(73) Proprietor: Samsung Electronics Co., Ltd., Gyeonggi-do 16677 (KR)
(72) Inventor: Jung, Moon Il, Gyeonggi-do (KR); Ko, Young Chul, Gyeonggi-do (KR); Jeong, In Jo, Gyeonggi-do (KR); Mingming,, Gyeonggi-do (KR); Yeo, Hyung Sok, Gyeonggi-do (KR)
(74) Representative: Walaski, Jan Filip

(56) References cited:
- EP-A2- 1 555 244
- DE-U1-202006 011 195
- US-I5- B 589 179
- APOSTOL I ET AL: "Pulsed laser deposition of semiconducting crystalline double-doped barium titanate thin films on nickel substrates", APPLIED SURFACE SCIENCE, ELSEVIER, AMSTERDAM, NL, vol. 257, no. 8, 1 February 2011 (2011-02-01), pages 3570-3576, XP027595270, ISSN: 0169-4332, DOI: 10.1016/J.APSUSC.2010.11.078 [retrieved on 2011-01-11]

## Description

The present invention relates to a capacitive deionization apparatus capable of removing ion substances included in water.

A technology of removing inorganic substances in producing residential water and industrial water is highly regarded in deciding the physical condition of humans, the process efficiency, and the quality of a product. Hard water includes high mineral content causing scaling phenomenon at an inner side of a heat exchanger of a boiler, a washing machine or a dishwasher and thus degrades the process efficiency. When washing a human body, hard water lowers the reactivity with soap and causes difficulty in removing the soap substance remaining on the skin, thus allowing the skin to be damaged and dried.

An example of a method of removing the ion substance in water, an ion exchange using an ion exchange resin is adopted. Accordingly, when using an ion substance removing method, a great amount of acid or alkaline substance is required during a process of regenerating the resin, once the ion exchange process has been completed. The resin having completed with the ion exchange needs to be replenished on a regular basis, and a great amount of waste liquid is produced during the regeneration of the resin.

Another example of the ion substance removing method is performed by using a separation layer technology, such as a reverse osmosis or electrodialysis. However, when the separation layer technology is used, a membrane contaminated due to fouling needs to be cleaned and the membrane needs to be replaced on a regular basis.
In order to prevent the constraints associated with the above-described deionization technology, a capacitive deionization technology using an electric double layer has been conducted into application of the deionization process. Such a capacitive deionization performs the deionization by using adsorption of ions caused by an electrical attraction force generated on an electric double layer that is formed on an electrode when an electric potential is applied to the electrode. The capacitive deionization as such operates at a low electric potential of an electrode, and has substantially low energy consumption when compared to other deionization technologies.

In the case of the capacitive deionization, when a low voltage of electric potential is applied, ion substances existing in water are removed through the adsorption on the electric double layer formed on the surface of the electrode. If the adsorbed ions reach the capacitance of the electrode, the potential of the electrode is converted to o volt, or is switched to the opposite potential to separate the adsorbed ions, thereby regenerating the electrode.

However, the above-described capacitive deionization has a difficulty in processing a great amount of flux at a short period of time.
EP1555244 A2 discloses a carbon-porous media composite electric, which can be used for preparing ultra pure water using a capacitive deionization process. In "Pulsed laser deposition of semiconducting crystalline double-doped barium titanate thin films on nickel substrates", Applied Surface Science vol. 257, no.8, 1 February 2011 pp.3570-3576, Apostol et al disclose methods of depositing doped barium titanate thin films on mechanically polished nickel substrates, using pulsed laser deposition. DE202006011195 U1 discloses a seawater desalination assembly including an alternating current electrolysis station, whose core has an asymmetric air gap in which there is a magnetic gradient. USB589179 discloses a process for generating a periodic non-uniform electric field, and for removing polarizable particulate material from fluid, using a ferroelectric apparatus.

Therefore, it is an aspect of the present disclosure to provide a capacitive deionization apparatus according to claim 1 provided with an electrode that includes ferroelectrics having a high dielectric constant.
Additional aspects will be set forth in part in the description which follows and, in part, will be obvious from the description, or may be learned by practice of the disclosure.
According to the present invention, there is provided a capacitive deionization apparatus according to claim 1.

In accordance with one aspect, a capacitive deionization apparatus includes an electrode and a power source unit. The electrode may include a cathode and an anode while having at least one of the cathode and the anode formed using dielectric material. The power source unit may be configured to apply a voltage to the electrode.

The dielectric material may have a dielectric constant higher than a dielectric constant of water.
The dielectric material may be coated on the at least one of the cathode and the anode. The cathode and the anode may include conductive material.
The cathode and the anode may include a mixture of conductive material and dielectric material.
The at least one of the cathode and the anode may have a specific surface area higher than a predetermined value.

One of the cathode and the anode may be coated with dielectric material having a dielectric constant higher than water, and an other of the cathode and the anode may be coated with material having a specific surface area higher than a predetermined value.

As described above, the speed of reaction of the ions producing hard water with the electrode is enhanced, thereby increasing the flux that is to be processed.

These and/or other aspects will become apparent and more readily appreciated from the following description of the embodiments, taken in conjunction with the accompanying drawings of which:
FIG. 1 is a view illustrating a concept of a capacitive deionization;
FIGS. 2A to 2C are views illustrating electrodes of a capacitive deionization apparatus in accordance with an embodiment;
FIG. 3 is a graph showing the change in electric current according to ion content of the water in the capacitive deionization apparatus using the electrode in accordance with an embodiment; and
FIGS. 4A and 4B are views illustrating the arrangement in accordance with an embodiment.

Reference will now be made in detail to the embodiments, examples of which are illustrated in the accompanying drawings, wherein like reference numerals refer to like elements throughout.

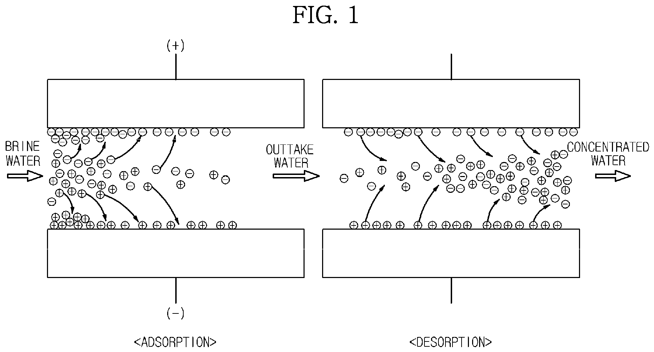

FIG. 1 is a view illustrating a concept of a capacitive deionization.

A capacitive deionization technology is achieved using adsorption/desorption of ions caused by an electric force on an electric double layer (EDL) that is formed on an interfacial surface of a charged electrode.

Referring to FIG. 1, as a voltage is applied to both ends of electrodes, the electrode is charged with a predetermined quantity of electricity.

The voltage applied to the both ends of the electrode lies in the range of a voltage in which the electrode reaction, that is, the electrolysis of water does not occur, for example, a voltage of 2V or below.

If the charged electrode allows brine water including ions to pass therethrough, ions having opposite charges are moved to respective opposite electrodes due to the static electricity and thus adsorbed to the surface of the electrode. Water passing through the electrode becomes processed water having ions removed therefrom.

Since the amount of ions adsorbed on the electrode is determined according the used capacitance of the electrode, the electrode for the capacitive deionization apparatus is implemented using a porous carbon electrode having a large, specific surface area.

If the adsorption capacity of the electrode is saturated, the electrode does not adsorb ions, so that outtake water including ions, which are originally included in the intake water, is produced.

Accordingly, a desorption process of desorbing the ions adsorbed on the electrode for regeneration needs to be performed.

In order to desorb the ions adsorbed on the electrode for regeneration, the electrodes need to be shorted or need to be charged opposite to the adsorption potential.
In this manner, the electrodes lose charges or have opposite charges, so that the adsorbed ions are rapidly desorbed. Such desorption of ions causes the regeneration of the electrode.

However, since the amount of the outtake water obtained through the above-described capacitive deionization for a unit time is small, the capacitive deionization is not available for applications of the product requiring a great amount of flux.

The present disclosure suggests a structure of an electrode that does not have an electrode reaction even if a high voltage is applied to both ends of the electrode, since the electrode is formed using ferroelectrics 12 having a large dielectric constant.
The electrode according to the present disclosure does not have an electrode reaction even with the application of a voltage of 2V or above, so a high voltage may be applied to the electrode. Accordingly, the electrodes may be configured to have an increased gap therebetween, so that the flux to be processed for a unit time is increased. In addition, by having the electric field formed at both ends of water passing through the electrodes having an increased intensity so as to enhance the mobility of ions in water, a rapid and efficient adsorption is achieved.

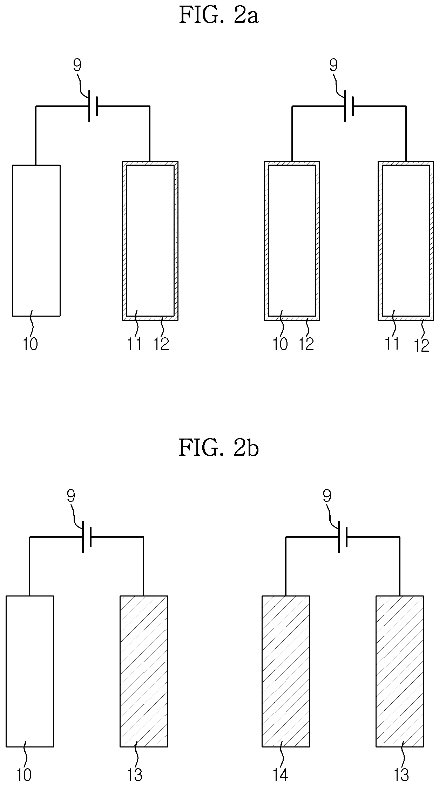

FIGS. 2A to 2C are views illustrating electrodes of a capacitive deionization apparatus in accordance with an embodiment.
The capacitive deionization apparatus according to the embodiment of the present disclosure includes electrodes having a cathode 11 and an anode 10, and a power source unit to supply the electrode with a voltage.

At least one of the cathode 11 and the anode 10 may be formed using dielectric material 12.
The left drawing of FIG. 2A is shown as having one of the cathode 11 and the anode 10 coated with the dielectric material 12. The drawing on the right side of FIG. 2A is shown as having both of the cathode 11 and the anode 10 coated with the dielectric material 12.
If the surface of the electrode is coated with the dielectric material 12, when a voltage is applied to the electrode, the supply of electrons is cut off, so that the electrode reaction does not occur. Accordingly, the electrolysis of water does not occur.
For a conventional electrode, when the electrode is supplied with a voltage of 2V or above, causing electrolysis of water. Therefore, conventional electrodes apply a voltage within a range not exceeding 2V.
According to the present disclosure, the surface of the electrode is coated with the dielectric material 12 to prevent the electrode reaction, so that a voltage of 2V or above may be applied to the electrode.

The dielectric material 12 is implemented using ferroelectrics having a dielectric constant higher than that of water.
According to a result of an experiment, if the dielectric material 12 coated on the electrode is higher than that of water, a strong electric field is formed on the water passing through between the electrodes, so that the mobility of ions included in the water is enhanced.

The experiment is conducted by coating the dielectric material 12 on the conductive electrode with a thickness of about 50µm, applying a voltage of about 200V to the electrodes while maintaining a gap of 50µm between the electrodes with the electrodes dipped in water and measuring the intensity of electric field formed on the water.

For the case A, the dielectric material 12 coated on the conductive electrode may be dielectric material having the same or similar dielectric constant as that of water. For the case B, the dielectric material 12 coated on the conductive electrode may be dielectric material having a dielectric constant smaller than that of water. For the case C, the dielectric material 12 coated on the conductive electrode may be dielectric material having a dielectric constant larger than that of water. That is, the experiment is conducted by varying the dielectric constant of the dielectric material 12 based on the dielectric constant of water.

When dielectric material having the same or similar dielectric constant as that of water is used as the dielectric material 12, the intensity of an electric field formed on the water is the same as that of electric field formed on the dielectric material 12. That is, the coating of the dielectric material having the same dielectric constant does not affect the intensity of an electric field formed on the water.

When dielectric material having a dielectric constant smaller than that of water is used as the dielectric material 12, the intensity of an electric field formed on the water is 0.5e5 V/m that is smaller than an electric field of 2e6 V/m formed on the dielectric material 12.

When dielectric material having a dielectric constant larger than that of water is used as the dielectric material 12, the intensity of an electric field formed on the water is 1.7e6 V/m that is larger than an electric field of 0.3e6 V/m formed on the dielectric material 12.

Accordingly, the ferroelectrics 12 having a dielectric constant larger than that of water is coated on the electrode, so that the electric field formed on water is increased without having electrolysis of water.

As described above, the ferroelectrics 12 coated on the electrode may prevent the electrolysis of water from occurring even if a high voltage is applied to the electrode, and may increase an electric field on water so as to effectively adsorb ions, for example, Mg2+, Ca2+, that serve as a main factor increasing the hardness of water.

According to one aspect of the invention the ferroelectrics 12 includes BaTiO3 based material having a shifter (BaZrO3, SrTiO3, BaSnO3, CaSno3, and PbTiO3) added thereto. The shifter represents an additive configured to change a curie point (the temperature of phase transition of ferroelectrics and paraelectrics). According to an alternative aspect of the invention the BaTiO3 based material has a depressor (MgO, MgTiO3, NiSnO3, CaTio3, and Bi2(Sno3)O3) added thereto, the depressor representing an additive configured to reduce the dependency of dielectric constant on the temperature curie point, Pb based complex perovskite, for example, Pb based complex perovskite compound having Mg, NB, W, and Fe substituted for Pb at A-site and Ti at B-site, and PbZrTi, Pb(Mg1/3Nb2/3)O3-PbTiO3, or inorganic material having a high dielectric constant, for example, PVDF (Polyvinylidene fluoride).
As described above, the electrode may be formed by coating the ferroelectrics 12 on an electrode including conductive material. As shown in FIG. 2B, the electrode may include only high-dielectric constant material, such as conductive ceramic, or include a mixture of conductive material and the ferroelectrics 12. Reference numeral 13 represents a cathode having ferroelectrics mixed therewith, and reference numeral 14 represents an anode having ferroelectrics mixed therewith.

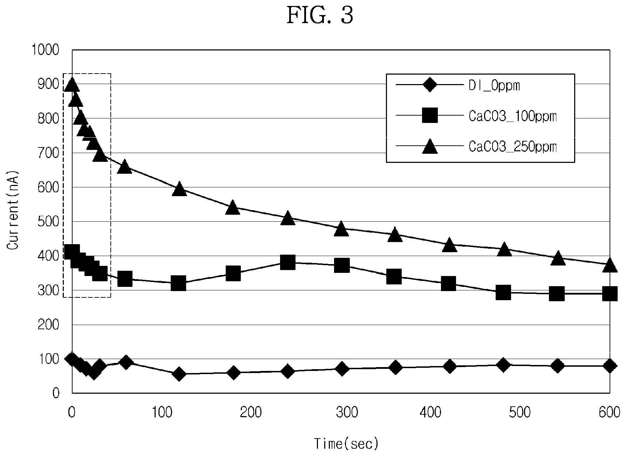

FIG. 3 is a graph showing the change in electric current according to ion content of the water in the capacitive deionization apparatus using the electrode in accordance with the embodiment of the present disclosure.
The electrode is formed by coating the ferroelectrics 12 on a conductive electrode. A gap between two electrodes is maintained at a distance of 2mm. For the medium, hard water having 100ppm of CaCo3, hard water having 250ppm of CaCo3, and DI-water are used. Under the condition as such, the change in electric current is measured. The voltage applied to the electrode is 10V.

When viewed a box indicated with a broken line, water containing more ions, that is, water having a larger CaCO₃ content has an initial electric current reduced in a rapid manner.

Since the intensity of current is represented as the mobility of ions, the reduction of current indicates the reduction of the mobility of ions.

Such a rapid reduction of the mobility of icons at an initial stage represents that the movement (adsorption/desorption) of ions may be controlled in a rapid manner.
That is, if a voltage is applied in a state that a coated electrode is dipped in water, an ion is rapidly adsorbed to an electrode having an opposite polarity to the ion at an initials stage.

In addition, the using of ferroelectrics 12 makes the application of a high voltage possible, so a gap between electrodes through which water pass is enlarged to the extent of millimeter over the extent of micrometer that is the conventional operating condition. Accordingly, a wider channel is ensured, so that the flux to be processed for a unit time is increased.

In the case of a capacitive deionization, the specific surface area of the electrode needs to be increased. As the specific surface area of the electrode is increased, a greater amount of ions is adsorbed to the electrode.

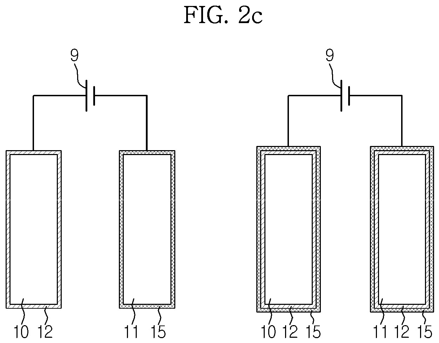

Referring to FIG. 2C, one of the cathode 11 and the anode 10 is coated with the ferroelectric 12. The other one of the cathode 11 and the anode 10 is formed by coating material 15 having a large specific surface area on a conductive electrode.

Alternatively, the cathode 11 and the anode 10 may be coated with the material having a large, specific surface area. The specific surface area may be set to an optimum value through an experiment.

Although the electrode is coated with the material 15 having a large specific surface area such that the specific surface area of the electrode is increased, the present disclosure is not limited thereto. The electrode may be formed including material having a desired specific surface area.

The material having a large, specific surface area coated on the electrode or forming the electrode may include activated carbon based material, for example, activated carbon powder, activated carbon fiber, carbon nanotube, carbon aerogel, or a mixture thereof.

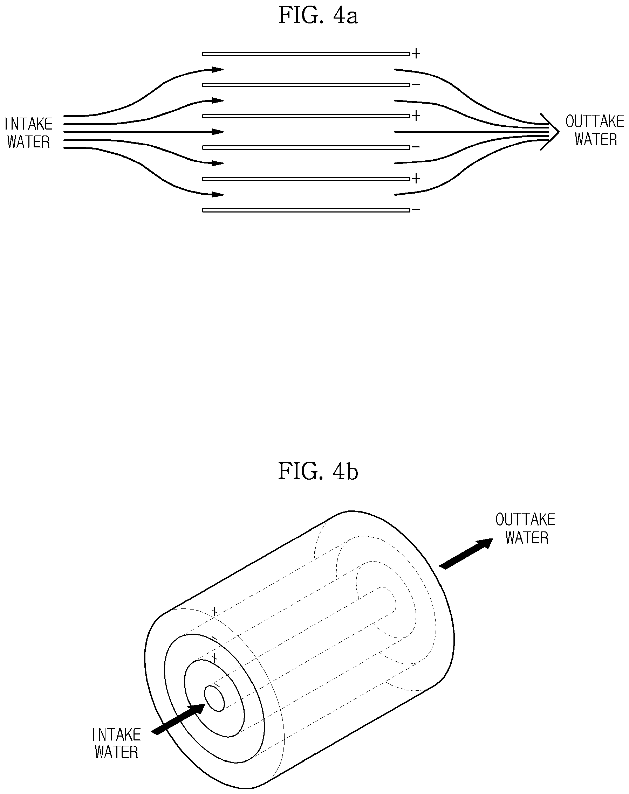

FIGS. 4A and 4B are views illustrating the arrangement in accordance with the embodiment of the present disclosure.

Referring to FIG. 4A, the cathode 11 and the anode 10 may be alternately disposed such that a large quality of flux is processed for a short time.

In this case, the cathode 11 and the anode 10 has the benefits from the above-described coating of the cathode 11 and the anode 10 with the material that does not cause electrolysis of water, even with the application of a high voltage and the material having a large specific area to enhance the deionization efficiency.

If the electrodes are disposed in parallel to each other as such, the amount of water to be processed for a unit time is increased, thereby providing a convenience in manufacturing a large-scale deionization apparatus.

As shown in FIG. 4B, the electrodes may be reconfigured by processing electrode plates in the form of a cylinder and alternately disposing the electrodes in the form of a concentric circle, while providing the same benefit as the above-described electrodes of FIG. 4A.

According to the capacitive deionization apparatus provided with the electrode using the ferroelectric in according to an embodiment, a high voltage is applied without causing the electrolysis of water and a high intensity of electric field is formed on the water, thereby rapidly and effectively controlling the ion substances that cause the hardness of water to be increased. In addition, the gap between the electrodes may be set to be wider when compared to the conventional electrodes, so that the amount of water to be processed for a unit time may be increased, thereby available for a product that is needed to process a large capacity of flux.

Although a few embodiments of the present disclosure have been shown and described, it would be appreciated by those skilled in the art that changes may be made in these embodiments without departing from the principles of the invention, the scope of which is defined in the claims.

## Claims

1. A capacitive deionization apparatus comprising:
an electrode comprising a cathode (11; 13) and an anode (10; 14) in which at least one of the cathode and the anode are formed using ferroelectric material (12) comprising a shifter configured to change a curie point of the ferroelectric material and/or a depressor configured to reduce the dependency of a dielectric constant of the ferroelectric material on the curie point; and
a power source unit (9) configured to apply a voltage to the electrode,
wherein the ferroelectric material has a dielectric constant higher than a dielectric constant of water, and comprises BaTiO₃ as a base material.

2. The capacitive deionization apparatus of claim 1, wherein the ferroelectric material is coated on the at least one of the cathode and the anode.

3. The capacitive deionization apparatus of claim 2, wherein the cathode and the anode include conductive material.

4. The capacitive deionization apparatus of any one of the preceding claims, wherein the cathode and the anode include a mixture of conductive material and ferroelectric material.

5. The capacitive deionization apparatus of any one of the preceding claims, wherein the at least one of the cathode and the anode has a specific surface area higher than a predetermined value.

6. The capacitive deionization apparatus of claim 1, wherein one of the cathode and the anode is coated with ferroelectric material having a dielectric constant higher than water, and the other of the cathode and the anode is coated with material having a specific surface area higher than a predetermined value.

7. The capacitive deionization apparatus of any one of the preceding claims, wherein the shifter comprises at least one of BaZrO₃, SrTiO₃, BaSnO₃, CaSnO₃ and PbTiO₃.

8. The capacitive deionization apparatus of any one of the preceding claims, wherein the depressor comprises at least one of MgO, MgTiO₃, NiSnO₃, CaTiO₃ and Bi₂(SnO₃)O₃.

## Patentansprüche

1. Kapazitive Entionisierungsvorrichtung, die Folgendes umfasst:
eine Elektrode, umfassend eine Kathode (11; 13) und eine Anode (10; 14) wobei mindestens eine von der Anode und der Kathode unter Verwendung von ferroelektrischem Material (12) gebildet sind, das einen Verschiebestoff, der dazu konfiguriert ist, eine Curie-Temperatur des ferroelektrischen Materials zu ändern und/oder einen Herabsetzungsstoff, der dazu konfiguriert ist, die Abhängigkeit einer Dielektrizitätskonstante des ferroelektrischen Materials von der Curie-Temperatur zu verringern, umfasst; und
eine Leistungsquelleneinheit (9), die dazu konfiguriert ist, eine Spannung an die Elektrode anzulegen,
wobei das ferroelektrische Material eine Dielektrizitätskonstante aufweist, die höher als eine Dielektrizitätskonstante von Wasser ist und BaTiO₃ als Basismaterial umfasst.

2. Kapazitive Entionisierungsvorrichtung nach Anspruch 1, wobei das ferroelektrische Material auf die mindestens eine von der Kathode und der Anode aufgetragen ist.

3. Kapazitive Entionisierungsvorrichtung nach Anspruch 2, wobei die Kathode und die Anode leitfähiges Material umfassen.

4. Kapazitive Entionisierungsvorrichtung nach einem der vorangehenden Ansprüche, wobei die Kathode und die Anode ein Gemisch aus leitfähigem Material und ferroelektrischem Material umfassen.

5. Kapazitive Entionisierungsvorrichtung nach einem der vorangehenden Ansprüche, wobei die mindestens eine von der Kathode und der Anode eine spezifische Oberfläche aufweist, die größer als ein vorbestimmter Wert ist.

6. Kapazitive Entionisierungsvorrichtung nach Anspruch 1, wobei eine von der Kathode und der Anode mit ferroelektrischem Material beschichtet ist, das eine höhere Dielektrizitätskonstante als Wasser aufweist, und die andere von der Kathode und der Anode mit Material beschichtet ist, das eine spezifische Oberfläche aufweist, die höher als ein vorbestimmter Wert ist.

7. Kapazitive Entionisierungsvorrichtung nach einem der vorangehenden Ansprüche, wobei der Verschiebestoff mindestens eines von BaZrO₃, SrTiO₃, BaSnO₃, CaSnO₃ und PbTiO₃ umfasst.

8. Kapazitive Entionisierungsvorrichtung nach einem der vorangehenden Ansprüche, wobei der Herabsetzungsstoff mindestens eines von MgO, MgTiO₃, NiSnO₃, CaTiO₃ und Bi₂(SnO₃)O₃ umfasst.

## Revendications

1. Appareil de déionisation capacitive, comprenant :
une électrode comprenant une cathode (11 ; 13) et une anode (10 ; 14), la cathode et/ou l'anode étant formées au moyen d'un matériau ferroélectrique (12) comprenant un décaleur conçu pour changer un point de Curie du matériau ferroélectrique et/ou un dépresseur conçu pour réduire la dépendance au point de Curie d'une constante diélectrique du matériau ferroélectrique ; et
une unité source d'alimentation (9), conçue pour appliquer une tension à l'électrode,
le matériau ferroélectrique ayant une constante diélectrique supérieure à une constante diélectrique de l'eau, et comprenant BaTiO₃ en guise de matériau de base.

2. Appareil de déionisation capacitive selon la revendication 1, dans lequel le matériau ferroélectrique enrobe la cathode et/ou l'anode.

3. Appareil de déionisation capacitive selon la revendication 2, dans lequel la cathode et l'anode incluent un matériau conducteur.

4. Appareil de déionisation capacitive selon l'une quelconque des revendications précédentes, dans lequel la cathode et l'anode incluent un mélange d'un matériau conducteur et d'un matériau ferroélectrique.

5. Appareil de déionisation capacitive selon l'une quelconque des revendications précédentes, dans lequel la cathode et/ou l'anode ont une surface spécifique supérieure à une valeur prédéterminée.

6. Appareil de déionisation capacitive selon la revendication 1, dans lequel l'une de la cathode et de l'anode est enrobée d'un matériau ferroélectrique ayant une constante diélectrique supérieure à celle de l'eau, et l'autre de la cathode et de l'anode est enrobée d'un matériau ayant une surface spécifique supérieure à une valeur prédéterminée.

7. Appareil de déionisation capacitive selon l'une quelconque des revendications précédentes, dans lequel le décaleur comprend au moins un composant parmi BaZrO₃, SrTiO₃, BaSnO₃, CaSnO₃ et PbTiO₃.

8. Appareil de déionisation capacitive selon l'une quelconque des revendications précédentes, dans lequel le dépresseur comprend au moins un composant parmi MgO, MgTiO₃, NiSnO₃, CaTiO₃ et Bi₂(SnO₃)O₃.
